# NOUVEAU FASCICULE DE BREVET EUROPEEN

(11) **EP 3 645 903 B3**
(45) Date de publication du présent fascicule: **19.08.2026**
(45) Mention de la délivrance du brevet: 10.01.2024
(21) Numéro de dépôt: 18740118.7
(22) Date de dépôt: 27.06.2018
(51) Int. Cl.: F16D 1/08, F16H 55/36

(54) **ENSEMBLE D'ENTRAINEMENT D'UNE MACHINE ELECTRIQUE TOURNANTE POUR UN VEHICULE AUTOMOBILE**
ANTRIEBSANORDNUNG FÜR EINE ELEKTRISCHE DREHMASCHINE EINES KRAFTFAHRZEUGES
MOTOR VEHICLE ROTARY ELECTRIC MACHINE DRIVE ASSEMBLY

(30) Priorité: 28.06.2017 FR 1755923
(43) Date de publication de la demande: 06.05.2020
(73) Titulaire: Valeo Electrification, 95800 Cergy (FR)
(72) Inventeur: CHAILLOU, Jimmy, 62630 Etaples sur Mer (FR); BILTERYST, Pierre-Yves, 62630 Etaples sur Mer (FR); DELIANNE, Henri, 62630 Etaples sur Mer (FR); MARGUERITTE, David, 62630 Etaples sur Mer (FR); JOZEFOWIEZ, Eric, 62630 Etaples sur Mer (FR); PERREAUT, Sylvain, 62630 Etaples sur Mer (FR); EL-GHAZAL, Mohamed, 62630 Etaples sur Mer (FR); DELECROIX, Lionel, 62170 Etaples sur Mer (FR); DEBRUYNE, Hubert, 62630 Etaples sur Mer (FR)
(74) Mandataire: Cardon, Nicolas
(86) Numéro de dépôt international: PCT/EP2018/067312
(87) Numéro de publication internationale: WO 2019/002402

(56) Documents cités:
- EP-A1- 0 661 474
- EP-A1- 3 032 102
- EP-A2- 1 892 430
- WO-A1-03/100278
- WO-A2-03/081063
- DE-A1- 3 732 223
- DE-C1- 10 137 025
- FR-A1- 2 898 068
- JP-A- 2000 283 264
- JP-A- 2004 336 965
- US-A- 5 275 577
- US-A1- 2015 141 184

## Description

### DOMAINE TECHNIQUE DE L'INVENTION

Le domaine technique de l'invention est celui des machines électriques tournantes, telles qu'un alternateur ou un alterno-démarreur, équipant des véhicules automobiles à moteur thermique.

L'invention concerne un ensemble d'entraînement d'une machine électrique tournante comportant un arbre de rotor et une pièce de liaison (une poulie selon l'invention ou un pignon dans une mise en œuvre non couverte par l'invention) permettant une liaison entre l'arbre et le système de transmission du couple (une courroie selon l'invention ou une chaîne dans une mise en œuvre non couverte par l'invention).

### ARRIERE-PLAN TECHNOLOGIQUE DE L'INVENTION

Un véhicule automobile à moteur thermique est équipé d'un alternateur qui a pourfonction de transformer de l'énergie mécanique provenant du moteur en énergie électrique dans le but notamment de recharger la batterie du véhicule et d'alimenter électriquement le réseau de bord du véhicule.

L'alternateur est une machine électrique tournante comprenant un arbre sur lequel est montée une poulie. Cette poulie est reliée par une courroie à une autre poulie montée surle vilebrequin du moteur. La courroie transmet le mouvement de rotation du vilebrequin à l'arbre de l'alternateur.

Il est connu de bloquer la poulie en rotation autour de l'arbre au moyen d'un écrou de serrage. Cependant, l'effort de serrage produit par ce moyen de fixation peut ne pas être suffisant pour maintenir la poulie solidaire de l'arbre. En effet, lorsque l'alternateur est en fonctionnement, l'écrou est susceptible de se desserrer, en particulier lorsque la poulie est soumise à un couple élevé.

Il apparaît donc un besoin d'améliorer le blocage en rotation de la poulie autour de l'arbre.

Des exemples sont divulgués dans : FR2898068, WO03081063, EP14834936, JP2004336965 et JP2000283264.

### RESUME DE L'INVENTION

L'invention propose une solution pour améliorer le maintien d'une pièce de liaison (une poulie selon l'invention ou un pignon dans une mise en œuvre non couverte par l'invention) permettant une liaison entre l'arbre et le système de transmission du couple (une courroie selon l'invention ou une chaîne dans une mise en œuvre non couverte par l'invention), ladite pièce de liaison étant montée solidaire en rotation et en translation sur un arbre.

L'invention concerne un ensemble d'entraînement d'une machine électrique tournante pour un véhicule automobile selon la revendication 1.

Ainsi, grâce à l'invention, il est possible d'assurer le blocage en rotation de la pièce de liaison sur l'arbre par l'intermédiaire du moletage tout en garantissant que la pièce de liaison soit montée de manière centrée.

L'ensemble d'entraînement selon le premieraspect de l'invention peut également comporter une ou plusieurs caractéristiques selon les revendications dépendantes.

Un deuxième aspect de l'invention concerne une machine électrique tournante comprenant un ensemble d'entraînement selon l'invention. La machine électrique est un alternateur ou un alterno-démarreur selon le deuxième aspect de l'invention.

### BREVE DESCRIPTION DES FIGURES

L'invention et ses différentes applications seront mieux comprises à la lecture de la description qui suit et à l'examen des figures qui l'accompagnent, parmi lesquelles :
- la figure 1 est une vue schématique partielle en coupe longitudinale d'un mode de réalisation d'un alternateur qui ne fait pas partie de l'invention;
- la figure 2 est une vue schématique partielle éclaté de l'invention;
- la figure 3 est une vue schématique partielle éclaté d'un deuxième mode de réalisation de l'ensemble d'entraînement qui ne fait pas partie de l'invention;

Les figures ne sont présentées qu'à titre indicatif et nullement limitatif de l'invention.

Pour plus de clarté, les éléments identiques ou similaires sont repérés par des signes de référence identiques sur toutes les figures.

### DESCRIPTION DETAILLEE DE MODES DE REALISA-TION DE L'INVENTION

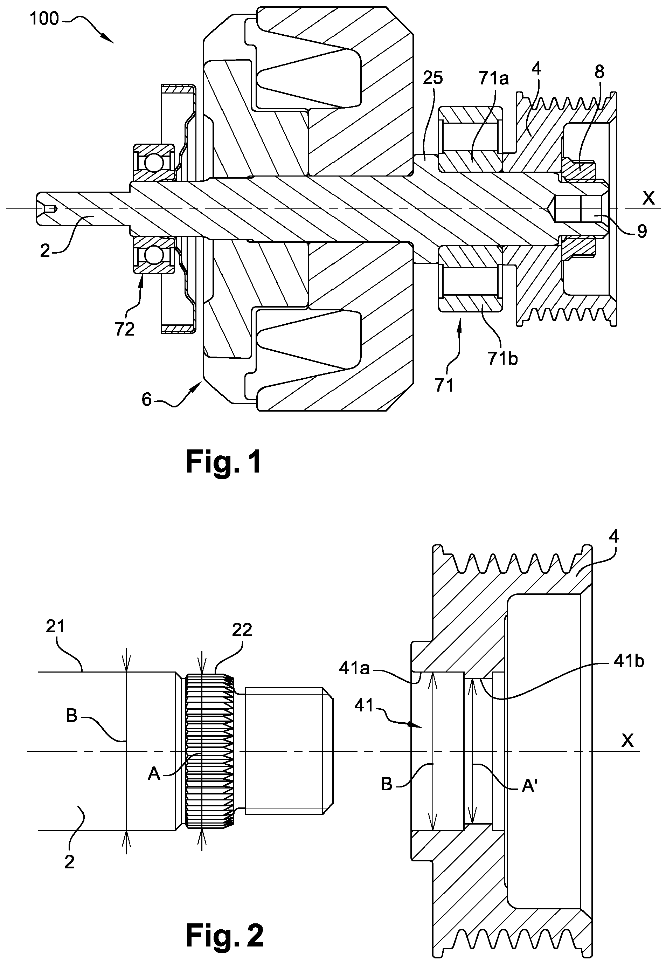

Un alternateur 100 va maintenant être décrit, en référence à la figure 1. L'alternateur est une machine électrique tournante configurée pour transformer de l'énergie mécanique provenant d'un moteur thermique de véhicule automobile en énergie électrique. Selon un autre mode de réalisation de l'invention, la machine électrique tournante peut être un alterno-démarreur.

L'alternateur 100 comporte un ensemble d'entraînement comprenant un arbre de rotor 2 s'étendant selon un axe longitudinal X et une pièce de liaison permettant une liaison entre l'arbre et le système de transmission du couple 4 montée solidaire en rotation et en translation sur une extrémité avant de l'arbre 2.

Cette pièce de liaison est formée dans l'exemple illustré par une poulie. Dans ce cas, le système de transmission du couple est formé par une courroie.

Dans une mise en oeuvre différente non illustrée et non couverte par l'invention, cette pièce de liaison peut être formée par un pignon. Dans ce cas, le système de transmission du couple est formé par une chaine. Pour la suite de la description, l'exemple choisi est celui d'une poulie. Mais il est entendu, que cette poulie pourrait être remplacée par un pignon dans une mise en œuvre non couverte par l'invention.

Dans l'ensemble de la description et dans les revendications, les termes « avant », « arrière », « devant » et « derrière » sont utilisés pour caractériser des positions relatives dans le référentiel de l'alternateur 100, l'avant de l'alternateur 100 correspondant à l'extrémité de l'arbre 2 munie de la poulie 4.

L'alternateur 100 comporte également un rotor 6 monté solidaire en rotation sur l'arbre 2, et un stator (non représenté) entourant le rotor 6. Le stator est porté par un carter (non représenté) monté à rotation par rapport à l'arbre 2 au moyen d'un roulement à billes avant 71 et d'un roulement à billes arrière 72 disposés de part et d'autre du rotor 6.

L'arbre 2 comporte une butée 25 disposée entre le rotor 6 et le roulement avant 71. Le roulement avant 71 comporte une piste de roulement interne 71a en contact avec l'arbre 2 et une piste de roulement externe 71b. La piste interne 71a du roulement avant 71 est en appui sur la butée 25 et la poulie 4 est maintenu serrée contre la piste interne 71a au moyen d'un écrou de serrage 8. L'extrémité avant de l'arbre 2 comporte une empreinte 9 destinée à recevoir une clé permettant de bloquer l'arbre 2 en rotation lors de l'assemblage de la poulie 4.

Le moteur thermique comporte un vilebrequin animé d'un mouvement de rotation. La poulie 4 est destinée à être entraînée en rotation par une courroie reliant mécaniquement la poulie 4 de l'alternateur 100 à une poulie montée solidaire en rotation sur le vilebrequin. Le mouvement de rotation du vilebrequin est transmis à la poulie 4, à l'arbre 2 et au rotor 6, ces éléments étant montés solidaire en rotation.

La figure 2 montre une vue schématique partielle éclatée d'un premier mode de réalisation de l'ensemble d'entraînement de l'alternateur 100. La poulie 4 comporte un alésage 41 pour le passage de l'arbre de rotor 2. L'alésage 41 comporte une première paroi 41a et une deuxième paroi 41b qui s'étendent axialement dans le prolongement l'une de l'autre. La deuxième paroi 41b est de forme cylindrique.

L'arbre de rotor 2 comporte une première surface 21 et une deuxième surface 22 qui s'étendent axialement dans le prolongement l'une de l'autre. La deuxième surface 22 s'étend sur toute la circonférence de l'arbre 2 et présente une forme générale complémentaire à celle de la deuxième paroi 41b de l'alésage 41. La deuxième surface 22 est de forme cylindrique.

Comme illustré sur la figure 2, la deuxième surface 22 est munie d'un moletage présentant un diamètre A sensiblement supérieur au diamètre A' de la deuxième paroi 41b de l'alésage 41. La poulie 4 est montée en force sur l'arbre de rotor 2 au moyen du moletage. En complément de l'écrou de serrage 8, le moletage contribue à bloquer en rotation et en translation la poulie 4 sur l'arbre 2. Le diamètre A du moletage est de préférence compris entre 1 et 1,1 fois le diamètre A' de la deuxième paroi 41b de l'alésage 41.

Lors de l'assemblage de la poulie 4 sur l'arbre 2, la première surface 21 coopère avec la première paroi 41a de l'alésage pour centrer la poulie autour de l'arbre 2. En effet, le moletage seul ne permet pas d'aligner de manière appropriée le centre de la poulie 4 avec l'axe longitudinal X qui correspond à l'axe de rotation de l'arbre 2. Grâce à la coopération de ces surfaces de centrage, l'axe de rotation de la poulie 4 est confondu avec celui de l'arbre 2 et la poulie 4 n'a alors pas de balourd.

Dans le mode de réalisation de la figure 2, la première surface 21 de l'arbre 2 et la première paroi 41a de l'alésage 41 ont une forme cylindrique de même diamètre B. Dans une alternative, qui ne fait pas partie de l'invention, la première surface 21 de l'arbre 2 et la première paroi 41a de l'alésage 41 peuvent toutes les deux présenter un ou plusieurs méplats formés parallèlement à l'axe longitudinal X et disposés de manière circonférentielle. Dans ce cas, la première surface 21 de l'arbre 2 et la première paroi 41a de l'alésage 41 ont une forme cylindrique tronquée longitudinalement, ce qui permet d'améliorer le blocage en rotation de la poulie 4 sur l'arbre de rotor 2.

La première surface 21 de centrage s'étend sur une longueur de préférence comprise entre 1 et 3 fois la longueur de la surface 22. Il convient de noter que la surface 21 forme une zone fonctionnelle de guidage entre l'arbre et la poulie.

Le moletage s'étend sur une longueur de préférence comprise entre 0,1 et 1 fois le diamètre de l'arbre 2.

Dans le mode de réalisation de la figure 2, le diamètre B de la première surface 21 de l'arbre 2 est supérieur au diamètre A du moletage. Le diamètre B de la première surface 21 de l'arbre de rotor est alors de préférence compris entre 1 et 2 fois le diamètre B du moletage. Dans ce cas, le moletage est disposé devant la première surface 21. De manière complémentaire, la deuxième paroi 41b de l'alésage 41 est disposée devant la première paroi 41a de l'alésage 41.

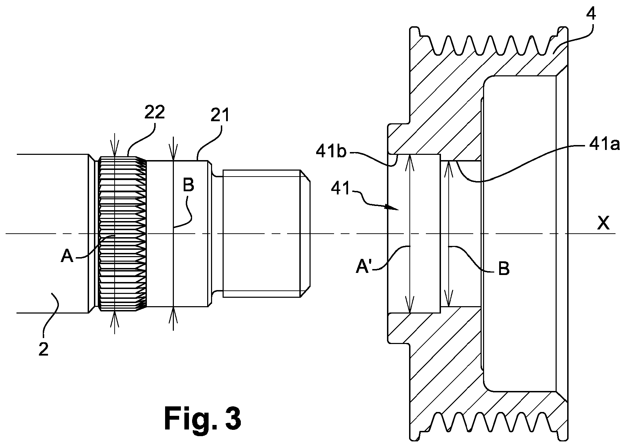

La figure 3 montre un deuxième mode de réalisation, qui ne fait pas partie de l'invention, dans lequel le diamètre B de la première surface 21 de l'arbre 2 est inférieur au diamètre A du moletage. Le diamètre A de la première surface de l'arbre de rotor est alors de préférence compris entre 0,5 et 1 fois le diamètre B du moletage Dans ce cas, le moletage est disposé derrière la première surface 21. De manière complémentaire, la deuxième paroi 41b de l'alésage 41 est disposée derrière la première paroi 41a de l'alésage 41.

Avantageusement, la première surface 21 de l'arbre de rotor 2 et la première paroi 41a de l'alésage 41 présentent chacune un état de surface comportant des aspérités ayant des dimensions inférieures à une dimension caractéristique. Selon un mode de réalisation, la première surface 21 et la première paroi 41a sont visuellement dépourvues d'aspérités. Selon un autre mode de réalisation, la première surface 21 et la première paroi 41a sont homogènes au toucher.

Selon l'invention, la première surface 21 de l'arbre de rotor 2 et la première paroi 41a de l'alésage 41 sont configurées pour être sensiblement lisses de manière à faciliter le centrage de la poulie 4 sur l'arbre 2.

Naturellement, l'invention n'est pas limitée aux modes de réalisations décrits en référence à la figure 2 et des variantes pourraient être envisagées sans sortir du cadre de l'étendue de la protection définie par les revendications.

La première surface 21 de l'arbre permettant le centrage de la poulie 4 peut notamment comporter une première partie et une deuxième partie disposées de part et d'autre du moletage. En outre dans une mise en œuvre non couverte par l'invention, la poulie pourrait également être remplacée par un pignon et le système de transmission du couple, par exemple une chaîne.

## Revendications

1. Ensemble d'entraînement d'une machine électrique tournante (100) pour un véhicule automobile, l'ensemble d'entraînement comportant un arbre de rotor (2) s'étendant selon un axe longitudinal (X) et une pièce de liaison (4) permettant une liaison entre l'arbre de rotor (2) et le système de transmission du couple comportant un alésage (41) pour le passage de l'arbre de rotor (2), la pièce de liaison (4) étant formée par une poulie, l'alésage (41) comportant une première paroi (41a) s'étendant axialement et une deuxième paroi (41b) cylindrique s'étendant axialement dans le prolongement de la première paroi (41a), et l'arbre de rotor (2) comportant:
- une première surface (21) s'étendant axialement et coopérant avec la première paroi (41a) de l'alésage (41) pour le centrage de la pièce de liaison (4) autour de l'arbre de rotor (2); et
- une deuxième surface (22) cylindrique s'étendant axialement et munie d'un moletage présentant un diamètre (A) supérieur au diamètre (A') de la deuxième paroi (41b) de l'alésage (41), la pièce de liaison (4) étant montée en force sur l'arbre de roto (2) au moyen du moletage
en ce que la première surface (21) de l'arbre de rotor (2) et la première paroi (41a) de l'alésage (41) sont des surfaces cylindriques présentant un même diamètre (B),
en ce que la pièce de liaison (4) est montée au niveau d'une première extrémité de l'arbre de rotor (2),
en ce que la première surface (21) de l'arbre de rotor (2) et la première paroi (41a) de l'alésage (41) sont configurées pour être sensiblement lisses de manière à faciliter le centrage de la pièce de liaison (4) sur l'arbre de rotor (2),
l'ensable d'entraînement étant **caractérise en ce que** le diamètre (B) de la première surface (21) de l'arbre de rotor (2) est supérieur au diamètre (A) du moletage, le moletage étant disposé entre la première surface (21) et la première extrémité de l'arbre de rotor (2) et,
**en ce que** le moletage est constitué d'une multitude de saillies qui viennent creuser des sillons dans la deuxième paroi (41b) de l'alésage (41) lorsque la pièce de liaison (4) est emmanchée en force sur l'arbre de rotor (2).

2. Ensemble selon la revendication précédente, **caractérisé en ce que** le diamètre (B) de la première surface (21) de l'arbre de rotor (2) est compris entre 1 et 2 fois le diamètre (A) du moletage.

3. Ensemble selon l'une quelconque des revendications précédentes selon lequel la première surface (21) de centrage s'étend sur une longueur de préférence comprise entre 1 et 3 fois la longueur de la deuxième surface (22).

4. Ensemble selon l'une quelconque des revendications précédentes selon lequel le moletage s'étend sur une longueur de préférence comprise entre 0,1 et 1 fois le diamètre de l'arbre de rotor (2).

5. Machine électrique tournante (100) **caractérisée en ce qu'**elle est un alternateur ou un alterno-démarreur et **en ce qu'**elle comporte
• un ensemble d'entraînement selon l'une quelconque des revendications 1 à 4,
• un rotor (6) monté solidaire en rotation sur l'arbre de rotor (2), et
• un stator entourant le rotor (6), le stator étant porté par un carter monté à rotation par rapport à l'arbre de rotor (2) au moyen d'un roulement à billes avant (71) et d'un roulement à billes arrière (72) disposés de part et d'autre du rotor (6), et
**en ce que** l'arbre de rotor (2) comporte une butée (25) disposée entre le rotor (6) et le roulement avant (71),
**en ce que** le roulement avant (71) comporte une piste de roulement interne (71a) en contact avec l'arbre de rotor (2) et une piste de roulement externe (71b), la piste interne (71a) du roulement avant (71) étant en appui sur la butée (25) et
**en ce que** la poulie (4) étant maintenue serrée contre la piste interne (71a) au moyen d'un écrou de serrage (8).

## Patentansprüche

1. Antriebsanordnung einer rotierenden elektrischen Maschine (100) für ein Kraftfahrzeug, wobei die Antriebsanordnung eine sich entlang einer Längsachse (X) erstreckende Rotorwelle (2) und ein Verbindungselement (4) umfasst, das eine Verbindung zwischen der Rotorwelle (2) und dem Drehmomentübertragungssystem ermöglicht und eine Bohrung (41) zum Durchführen der Rotorwelle (2) aufweist, wobei das Verbindungsteil (4) durch eine Riemenscheibe gebildet ist, die Bohrung (41) eine sich axial erstreckende erste Wand (41a) und eine sich axial in Verlängerung der ersten Wand (41a) erstreckende zylindrische zweite Wand (41b) aufweist und die Rotorwelle (2) Folgendes aufweist:
- eine erste, sich axial erstreckende Fläche (21), die mit der ersten Wand (41a) der Bohrung (41) zusammenwirkt, um das Verbindungsteil (4) um die Rotorwelle (2) zu zentrieren; und
- eine zweite, sich axial erstreckende zylindrische Fläche (22), die mit einer Rändelung versehen ist, deren Durchmesser (A) größer ist als der Durchmesser (A') der zweiten Wand (41b) der Bohrung (41), wobei das Verbindungsteil (4) mittels der Rändelung presssitzend auf der Rotorwelle (2) montiert ist
dass die erste Fläche (21) der Rotorwelle (2) und die erste Wand (41a) der Bohrung (41) zylindrische Flächen mit demselben Durchmesser (B) sind,
dass das Verbindungsteil (4) an einem ersten Ende der Rotorwelle (2) angebracht ist,
dass die erste Fläche (21) der Rotorwelle (2) und die erste Wand (41a) der Bohrung (41) im Wesentlichen glatt ausgebildet sind, um die Zentrierung des Verbindungsteils (4) auf der Rotorwelle (2) zu erleichtern,
wobei die Antriebsvorrichtung **dadurch gekennzeichnet ist, dass** der Durchmesser (B) der ersten Oberfläche (21) der Rotorwelle (2) größer ist als der Durchmesser (A) der Rändelung, wobei die Rändelung zwischen der ersten Oberfläche (21) und dem ersten Ende der Rotorwelle (2) angeordnet ist, und
dass die Rändelung aus einer Vielzahl von Vorsprüngen besteht, die beim Pressaufstecken des Verbindungsteils (4) auf die Rotorwelle (2) Rillen in die zweite Wand (41b) der Bohrung (41) einritzen.

2. Baugruppe nach dem vorstehenden Anspruch, **dadurch gekennzeichnet, dass** der Durchmesser (B) der ersten Fläche (21) der Rotorwelle (2) zwischen dem 1- und 2-fachen des Durchmessers (A) der Rändelung liegt.

3. Baugruppe nach einem der vorstehenden Ansprüche, wobei sich die erste Zentrierfläche (21) über eine Länge erstreckt, die vorzugsweise zwischen dem 1- und 3-fachen der Länge der zweiten Fläche (22) liegt.

4. Anordnung nach einem der vorstehenden Ansprüche, wobei sich die Rändelung über eine Länge erstreckt, die vorzugsweise zwischen dem 0,1- und dem 1-fachen des Durchmessers der Rotorwelle (2) liegt.

5. Rotierende elektrische Maschine (100), **dadurch gekennzeichnet, dass** es sich um einen Generator oder einen Startergenerator handelt und dass sie
• eine Antriebsanordnung gemäß einem der Ansprüche 1 bis 4,
• einen Rotor (6), der drehfest auf der Rotorwelle (2) gelagert ist, und
• einen den Rotor (6) umgebenden Stator, wobei der Stator von einem Gehäuse getragen wird, das mittels eines vorderen Kugellagers (71) und eines hinteren Kugellagers (72), die beiderseits des Rotors (6) angeordnet sind, relativ zur Rotorwelle (2) drehbar gelagert ist, und
dass die Rotorwelle (2) einen Anschlag (25) aufweist, der zwischen dem Rotor (6) und dem vorderen Kugellager (71) angeordnet ist,
dass das vordere Kugellager (71) eine innere Laufbahn (71a), die mit der Rotorwelle (2) in Kontakt steht, und eine äußere Laufbahn (71b) aufweist, wobei die innere Laufbahn (71a) des vorderen Kugellagers (71) auf dem Anschlag (25) aufliegt, und
dass die Riemenscheibe (4) mittels einer Spannmutter (8) fest gegen die innere Laufbahn (71a) gespannt gehalten wird.

## Claims

1. Drive assembly for a rotating electrical machine (100) for a motor vehicle, the drive assembly comprising a rotor shaft (2) extending along a longitudinal axis (X) and a connecting member (4) providing a connection between the rotor shaft (2) and the torque transmission system, the connecting member (4) comprising a bore (41) through which the rotor shaft (2) passes, the connecting member (4) being formed by a pulley, the bore (41) comprising a first wall (41a) extending axially and a second cylindrical wall (41b) extending axially in line with the first wall (41a), and the rotor shaft (2) comprising:
- a first surface (21) extending axially and cooperating with the first wall (41a) of the bore (41) to center the connecting member (4) about the rotor shaft (2); and
- a second cylindrical surface (22) extending axially and provided with knurling having a diameter (A) greater than the diameter (A') of the second wall (41b) of the bore (41), the connecting member (4) being press-fitted onto the rotor shaft (2) by means of the knurling
in that the first surface (21) of the rotor shaft (2) and the first wall (41a) of the bore (41) are cylindrical surfaces having the same diameter (B),
in that the connecting piece (4) is mounted at a first end of the rotor shaft (2),
in that the first surface (21) of the rotor shaft (2) and the first wall (41a) of the bore (41) are configured to be substantially smooth so as to facilitate the centring of the connecting member (4) on the rotor shaft (2),
the drive arrangement being **characterised in that** the diameter (B) of the first surface (21) of the rotor shaft (2) is greater than the diameter (A) of the knurling, the knurling being arranged between the first surface (21 ) and the first end of the rotor shaft (2), and
**in that** the knurling consists of a multitude of protrusions which come to hollow out furrows in the second wall (41b) of the bore (41) when the connecting member (4) is press-fitted onto the rotor shaft (2).

2. An assembly according to the preceding claim, **characterised in that** the diameter (B) of the first surface (21) of the rotor shaft (2) is between 1 and 2 times the diameter (A) of the knurling.

3. An assembly according to any one of the preceding claims, in which the first centring surface (21) extends over a length preferably between 1 and 3 times the length of the second surface (22).

4. An assembly according to any one of the preceding claims, in which the knurling extends over a length preferably between 0.1 and 1 times the diameter of the rotor shaft (2).

5. A rotating electrical machine (100), **characterised in that** it is an alternator or a starter-generator and **in that** it comprises
• a drive assembly according to any one of claims 1 to 4,
• a rotor (6) mounted for rotation in unison with the rotor shaft (2), and
• a stator surrounding the rotor (6), the stator being supported by a housing mounted so as to rotate relative to the rotor shaft (2) by means of a front ball bearing (71) and a rear ball bearing (72) arranged on either side of the rotor (6), and
**in that** the rotor shaft (2) comprises a stop (25) arranged between the rotor (6) and the front ball bearing (71),
**in that** the front ball bearing (71) comprises an inner raceway (71a) in contact with the rotor shaft (2) and an outer raceway (71b), the inner raceway (71a) of the front ball bearing (71) bearing against the stop (25), and
**in that** the pulley (4) is held clamped against the inner raceway (71a) by means of a clamping nut (8).
